(19) **Europäisches Patentamt European Patent Office Office européen des brevets**

(11) **EP 2 368 104 B1**

(12) **FASCICULE DE BREVET EUROPEEN**

(45) Date de publication et mention de la délivrance du brevet:
**29.04.2020 Bulletin 2020/18**

(21) Numéro de dépôt: **09804271.6**

(22) Date de dépôt: **15.12.2009**

(51) Int Cl.:
**G01N 21/27** *(2006.01)*    **G01N 21/85** *(2006.01)*

(86) Numéro de dépôt international:
**PCT/FR2009/001426**

(87) Numéro de publication internationale:
**WO 2010/076414 (08.07.2010 Gazette 2010/27)**

(54) **SONDE OPTIQUE D'ABSORPTION POURVUE D'UN MONITORING DE LA SOURCE D'ÉMISSION**

MIT EMISSIONSQUELLENÜBERWACHUNG VERSEHENE OPTISCHE ABSORPTIONSSONDE

OPTICAL ABSORPTION PROBE PROVIDED WITH EMISSION SOURCE MONITORING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.12.2008 FR 0807079**

(43) Date de publication de la demande:
**28.09.2011 Bulletin 2011/39**

(73) Titulaire: **Silios Technologies**
**13790 Peynier (FR)**

(72) Inventeurs:
• **TISSERAND, Stéphane**
**F-13006 Marseille (FR)**
• **HUBERT, Marc**
**F-13090 Aix En Provence (FR)**
• **ROUX, Laurent**
**F-13013 Marseille (FR)**
• **REVERSAT, Fabien**
**F-31770 Colomiers (FR)**

(74) Mandataire: **Cabinet Prugneau-Schaub**
**Europole - Le Grenat**
**3, avenue Doyen Louis Weil**
**38000 Grenoble (FR)**

(56) Documents cités:
DE-A1- 3 422 309    FR-A1- 2 911 684
US-A- 4 037 973    US-A- 4 290 695

**Description**

La présente invention concerne une sonde optique d'absorption pourvue d'un monitoring de la source d'émission.

Le domaine de l'invention est celui de l'analyse par spectrométrie optique d'absorption d'un milieu fluide, gaz ou liquide.

Au nombre des applications potentielles de l'invention, figure notamment le contrôle de l'eau potable. Il s'agit alors de déterminer la quantité de matière organique (bactéries par exemple) en suspension dans l'eau. L'analyse peut se faire sur un large spectre s'étendant du proche UV (à partir de 250 nm par exemple) jusqu'au visible. Elle peut aussi être réalisée sur un ensemble réduit de bandes étroites de longueurs d'ondes judicieusement choisies (en particulier 250 nm, 365 nm, 465 nm et 665 nm).

Une telle analyse est pratiquée au moyen d'une sonde optique qui comporte une cellule d'analyse pourvue d'un module d'émission et d'un module de détection. Le module d'émission comprend une source lumineuse disposée derrière une fenêtre de diffusion figurant sur le corps de ce module d'émission. Eventuellement, un filtre est disposé entre la source et la fenêtre (analyse monochromatique ou quasi-monochromatique). Le module de détection comprend un détecteur disposé derrière un hublot figurant sur le corps de ce module de détection. Eventuellement, un filtre est disposé entre le hublot et le détecteur. Le milieu à analyser se trouve entre le module d'émission et le module de détection.

De manière connue, l'analyse se pratique en deux temps. Dans un premier temps, la calibration consiste à effectuer une mesure d'absorption sur un milieu de référence, de l'eau parfaitement propre dans le cas présent. Dans un deuxième temps, la mesure proprement dite consiste à effectuer la même opération sur le milieu critique à analyser. L'absorption du milieu critique est pondérée par celle du milieu de référence.

Il s'avère que le module d'émission est soumis à de nombreuses dérives qui ne cessent de croître pendant sa durée de vie. On mentionnera notamment :

- variation de température du milieu critique,
- variation de puissance de la source d'émission,
- variation du profil angulaire du faisceau émis par cette source,
- variation du spectre d'émission,
- apparition et accroissement d'un bruit lumineux.

Ces dérives que l'on ne peut maîtriser interviennent souvent de manière aléatoire. Il n'est pas possible d'estimer le moment où elles deviennent suffisamment importantes pour perturber l'analyse. Or chacune de ces dérives nécessite une nouvelle calibration pour disposer de mesures faites dans les mêmes conditions sur le milieu de référence et sur le milieu critique. Les calibrations doivent donc être répétées périodiquement et il va sans dire qu'il s'agit là d'une sérieuse contrainte.

FR 2 911 684 A1 concerne un capteur optique pour la mesure simultanée de la déviation et de l'atténuation d'au moins un faisceau lumineux dans un fluide. Un tel capteur comprend : des moyens de génération d'un faisceau lumineux principal, et des premier et second faisceaux lumineux secondaires issus du faisceau lumineux principal ; des moyens de mesure de déviation, permettant d'obtenir une mesure de déviation par réfraction, subie par le premier faisceau secondaire du fait de la traversée d'au moins une couche d'un matériau déterminé accolée à une première couche de fluide ; des moyens de mesure d'atténuation, permettant d'obtenir une mesure d'atténuation, subie par le second faisceau secondaire du fait de la traversée d'au moins une seconde couche de fluide ; des moyens de correction de ladite mesure d'atténuation tenant compte d'au moins une information obtenue grâce à ladite mesure de déviation.

Ainsi, le document US 4 037 973 décrit un dispositif sensible à la lumière pour mesurer une quantité de particules dans un liquide. Ce dispositif comporte un module d'émission et un module de détection. Il comporte aussi une cellule de monitoring apte à compenser pour partie les dérives mentionnées ci-dessus. Cependant, cette cellule de monitoring ne permet pas de corriger de manière suffisante les variations qui dépendent de la position du détecteur par rapport à la source d'émission, notamment :

- les défauts d'homogénéité du milieu critique,
- la variation du profil angulaire du faisceau émis par la source d'émission,
- la répartition spatiale du bruit lumineux.

La présente invention a ainsi pour objet une sonde optique de mesure d'absorption qui satisfait à une préoccupation constante de l'homme du métier, à savoir réduire le plus possible le nombre des calibrations.

Selon l'invention, une sonde optique de mesure d'absorption prévue pour produire une valeur d'absorption Am comporte une cellule d'analyse d'un milieu à analyser, cette cellule d'analyse comprenant un module d'émission muni d'une source lumineuse et un module de détection apte à produire un signal de détection et muni d'un premier détecteur, ladite sonde optique comportant de plus une cellule de monitoring apte à produire un signal de monitoring, et munie d'un deuxième détecteur, ladite sonde optique étant arrangée pour que le premier détecteur reçoive un faisceau optique émis par la source lumineuse partiellement réfléchi au niveau de la cellule de monitoring et partiellement reçu par le deuxième détecteur dans laquelle ladite cellule de monitoring est agencée sur le chemin optique reliant ledit module d'émission audit module de détection,

- la source lumineuse est disposée derrière une fenêtre de diffusion figurant sur une face active de ladite cellule d'analyse,
- le premier détecteur est disposé derrière un premier hublot figurant sur ladite face active de ladite cellule d'analyse,
- le deuxième détecteur est disposé derrière un deuxième hublot figurant sur une face active de la cellule de monitoring, le milieu à analyser se trouvant entre la face active de la cellule d'analyse et la face active de la cellule de monitoring,
- l'agencement mécanique de la sonde optique est ainsi fait que le faisceau lumineux issu de la source lumineuse traverse successivement la fenêtre de diffusion, le milieu à analyser, le deuxième hublot et soit finalement transmis pour partie au deuxième détecteur, et
- ledit deuxième hublot est incliné par rapport à la face active de la cellule d'analyse de sorte qu'il réfléchisse partiellement le faisceau issu de ladite source lumineuse en direction dudit premier hublot et de sorte que la partie du faisceau lumineux qui est réfléchie par le deuxième hublot traverse successivement à nouveau le milieu à analyser, le premier hublot et est finalement transmise au premier détecteur.

La cellule de monitoring permet de compenser les différentes dérives visées ci-dessus.

Les cellules d'analyse et de monitoring se présentent chacune sous la forme d'un corps étanche présentant une face active.

De préférence, ces deux détecteurs sont identiques.

Suivant une caractéristique additionnelle de l'invention, les cellules d'analyse et de monitoring étant reliées par un moyen de liaison, les faces actives de ces cellules sont en vis-à-vis.

Par ailleurs, la sonde optique comporte un circuit de contrôle pour produire un signal de mesure Qm par pondération du signal de détection au moyen du signal de monitoring.

De préférence, le signal de mesure Qm vaut le rapport du signal de détection au signal de monitoring.

A titre d'exemple, le circuit de contrôle ayant en mémoire les valeurs suivantes :

- une mesure de référence Qr,
- une absorption de référence Ar,
- une longueur caractéristique Lc,

le terme Ln signifiant logarithme népérien,
la valeur d'absorption Am est dérivée de l'expression suivante :

$$Am = Ar-(Ln((Qm-Qr/Qr)+1)/Lc)$$

Avantageusement, le circuit de contrôle est pourvu d'une compensation en température.

A titre d'exemple, cette compensation en température est réalisée au moyen de deux constantes K1, K2, d'une température de calibration $\vartheta_0$ et de la température $\vartheta$ à laquelle est réalisée la mesure à partir de l'expression suivante :

$$Qm(\vartheta)/Qr(\vartheta_0)=exp((Ar-Am).Lc).(\vartheta+K1)/(\vartheta_0+K1).(\vartheta_0+K2)/(\vartheta+K2)$$

La présente invention apparaîtra maintenant avec plus de détails dans le cadre de la description qui suit d'un exemple de réalisation donné à titre illustratif en se référant aux figures annexées qui représentent :

- la figure 1, une vue en perspective d'une sonde optique de mesure d'absorption,
- la figure 2, un schéma en coupe du montage mécanique de cette sonde optique, et
- la figure 3, un schéma de principe du montage électrique de cette sonde optique.

Les éléments présents dans plusieurs figures sont affectés d'une seule et même référence.

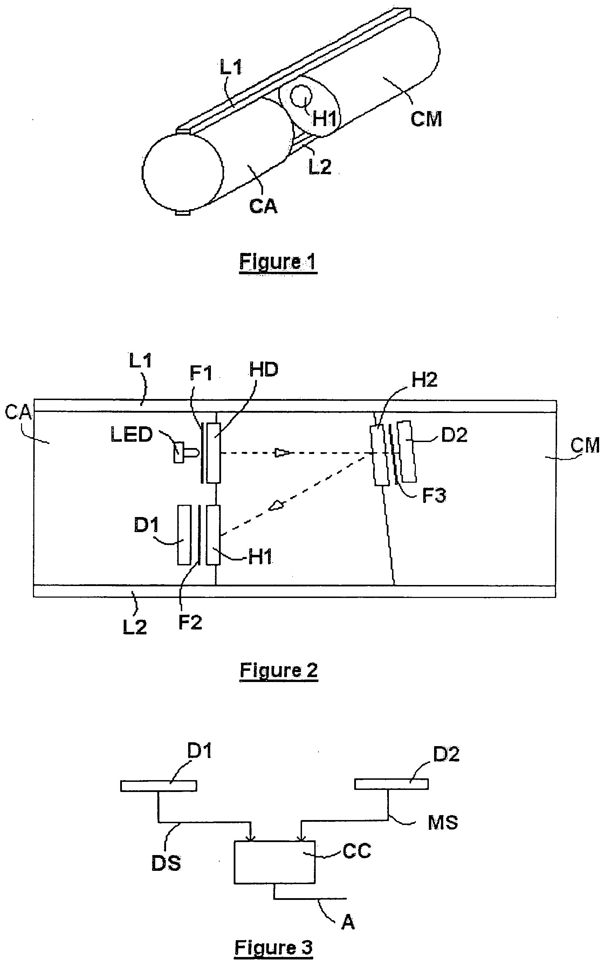

En référence à la figure 1, la sonde optique se présente comme deux éléments distincts, la cellule d'analyse CA et la cellule de monitoring CM. Dans le cas présent, ces deux cellules se présentent chacune comme un corps cylindrique. Elles sont reliées par un moyen de liaison qui prend ici la forme d'un longeron supérieur L1 et d'un longeron inférieur L2. La liaison est ainsi réalisée que les deux corps cylindriques sont coaxiaux. Les faces en regard de ces deux corps sont dorénavant dénommées faces actives. Naturellement, le milieu à analyser se trouve entre ces deux faces actives.

En référence à la figure 2, la cellule d'analyse comprend CA essentiellement un module d'émission et un module de détection.

Le module d'émission comporte une source lumineuse LED qui illumine une fenêtre de diffusion HD disposée sur la face active de la cellule. Selon la nature de cette source, il peut être nécessaire de prévoir un filtre passe-bande F1 entre celle-ci et la fenêtre HD. Il est cependant courant de recourir pour une telle source à une diode électroluminescente qui présente un spectre d'émission relativement étroit, le filtre n'étant donc pas indispensable.

Le module de détection comporte un premier détecteur D1 qui est agencé derrière un premier hublot H1. Ce hublot H1 figure lui aussi sur la face active de la cellule d'analyse CA à proximité de la fenêtre de diffusion HD. Eventuellement, un filtre F2 est interposé entre le premier hublot H1 et le détecteur D1, ceci notamment s'il n'y a pas de filtre dans le module d'émission.

Le milieu à analyser étant un fluide, la cellule d'analyse est bien entendu étanche. Cette dernière est donc munie d'une paroi du côté opposé à sa face active.

La présentation ci-dessus considère implicitement que le corps de cette cellule est opaque au rayonnement utilisé pour l'analyse. Il ne faut pas voir là une limitation de l'invention qui s'applique également si ce corps est transparent à ce même rayonnement. On comprend donc bien que les termes fenêtre ou hublot doivent s'entendre dans leur acception la plus large, c'est-à-dire surface transparente.

La cellule de monitoring CM comporte un deuxième détecteur D2 qui est agencé derrière un deuxième hublot H2 qui figure sur sa face active en regard de celle de la cellule d'analyse. Là encore, éventuellement, un filtre F3 est interposé entre ces deux éléments H2, D2, ceci notamment s'il n'y a pas de filtre dans le module d'émission. Le deuxième hublot H2 est partiellement réfléchissant.

De préférence, dans le souci d'optimiser les performances de la sonde, le deuxième détecteur D2 est identique au premier D1. De même, les deux hublots H1, H2 sont de même nature.

L'agencement mécanique de la sonde est ainsi fait que le faisceau lumineux issu de la source lumineuse LED traverse successivement la fenêtre de diffusion HD, le milieu à analyser, le deuxième hublot H2 et soit finalement transmis pour partie au deuxième détecteur D2.

Par ailleurs, ce deuxième hublot H2 est incliné par rapport à la face active de la cellule d'analyse de sorte que la partie du faisceau lumineux qui est réfléchie par le deuxième hublot H2 traverse successivement à nouveau le milieu à analyser, le premier hublot H1 et soit finalement transmis au premier détecteur D1.

Ainsi, le deuxième détecteur D2 est interposé sur le chemin optique qui relie la source lumineuse LED au premier détecteur D1.

En référence à la figure 3, on détaille maintenant le montage électrique de la sonde optique ainsi que la manière de mesurer l'absorption dans la bande de réception du premier détecteur D1.

Le circuit de contrôle CC reçoit :

- un signal de détection DS du premier détecteur D1,
- un signal de monitoring MS du deuxième détecteur.

Il produit un coefficient d'absorption A ou toute valeur intermédiaire permettant d'obtenir ce coefficient.

Les notations suivantes sont maintenant adoptées :

- $I0$, intensité émise par la source lumineuse LED,
- $I1$, intensité reçue par le premier détecteur D1, représentée par le signal de détection DS,
- $I2$, intensité reçue par le deuxième détecteur D2, représentée par le signal de monitoring MS,
- $R$, le coefficient de réflexion du deuxième hublot H2,
- $T$, le coefficient de transmission de ce deuxième hublot H2,
- $G2$, le coefficient d'atténuation entre la source lumineuse LED et le deuxième hublot H2,
- $G1$, le coefficient d'atténuation entre la source lumineuse LED et le premier H1 hublot,
- $L2$, la distance entre la fenêtre de diffusion HD et le deuxième hublot,
- $L1$, la distance entre les deux hublots H1, H2,
- $A$, le coefficient d'absorption, plus particulièrement Ar ce coefficient dans le milieu de référence (mémorisé par le circuit de contrôle CC) et Am ce coefficient dans le milieu à analyser,
- exp, la fonction exponentielle, et
- Ln, le logarithme népérien.

Les coefficients d'atténuation rendent compte du fait que les détecteurs ne reçoivent pas tout le flux lumineux émis dans leurs directions. Ils dépendent de considérations géométriques et sont donc indépendants des coefficients d'absorption qui dépendent quant à eux de propriétés physico-chimiques du milieu analysé.

L'intensité reçue par le deuxième détecteur vaut :

$$I2 = I0.T.G2.exp(-A.L2)$$

L'intensité reçue par le premier détecteur vaut :

$$I1 = I0.R.G1.exp(-A.(L2+L1))$$

Il convient de souligner ici que, dans le but d'optimiser la sensibilité de la sonde, le deuxième hublot est ainsi conçu que ces deux intensités I2, I1 soient du même ordre de grandeur. La réflexion partielle de ce hublot peut être obtenue de différentes manières, notamment par :

- un revêtement d'une fine épaisseur de métal,
- une couche de métal opaque et réfléchissante dans laquelle sont ménagées des ouvertures en damier, en lignes, ...
- un miroir présentant une ouverture centrale,
- un miroir recouvrant partiellement ce hublot.

On définit donc la mesure Q comme le rapport de l'intensité reçue par le premier détecteur à celle reçue par le deuxième détecteur :

$$Q = I1/I2$$

$$Q = ((R.G1)/(T.G2)).exp(-A.L1)$$

L'expression (R.G1)/(T.G2) est une constante qui vaut K :

$$Q = K.exp(-A.L1)$$

Il apparaît que seule intervient la distance L1 entre les deux hublots qui est donc la longueur caractéristique Lc de la sonde optique (Lc=L1).

Cette longueur caractéristique Lc est mémorisée par le circuit de contrôle CC.

La calibration dans le milieu de référence, de l'eau propre dans le cas présent, donne la mesure de référence Qr :

$$Qr = K.exp(-Ar.Lc)$$

Cette mesure de référence est également mémorisée par le circuit de contrôle CC.

La mesure dans le milieu à analyser donne le signal de mesure Qm :

$$Qm = K.exp(-Am.Lc)$$

Il vient que :

$$(Qm-Qr)/Qr = exp((Ar-Am).Lc)-1$$

Le circuit de contrôle produit ainsi le coefficient d'absorption recherché Am :

$$Am = Ar-(Ln(((Qm-Qr)/Qr)+1)/Lc) \qquad [1]$$

D'autres moyens sont disponibles pour remonter au coefficient d'absorption Am du milieu à analyser. A titre d'exemple, on calcule directement le rapport du signal de mesure Qm à la mesure de référence Qr :

$$Qm/Qr=exp((Ar-Am).Lc),$$

d'où :

$$Am= Ar -(Ln(Qm/Qr)/Lc) \qquad [2]$$

Les équations [1] et [2] sont équivalentes et l'invention vise toutes les solutions qui dérivent du principe exposé ci-dessus.

On prévoit éventuellement une compensation en température pour tenir compte du fait que la calibration et la mesure proprement dite n'ont pas été faites à la même température.

On admet une variation linéaire des intensités en fonction de la température $\vartheta$, ces variations étant quantifiées au moyen de quatre constantes $\alpha$, $\beta$, $\chi$ et $\delta$ :

L'intensité reçue par le deuxième détecteur vaut maintenant :

$$I2(\vartheta)=I0.T.G2.exp(-A.L2).(\chi\vartheta+\delta) \qquad [3]$$

L'intensité reçue par le premier détecteur vaut :

$$I1(\vartheta)=I0.R.G1.exp(-A.(L2+L1)).(\alpha\vartheta+\beta) \qquad [4]$$

La mesure Q($\vartheta$) vaut toujours le rapport de l'intensité reçue par le premier détecteur à celle reçue par le deuxième détecteur :

$$Q(\vartheta)=I1(\vartheta)/I2(\vartheta)$$

$$Q(\vartheta)=K.exp(-A.Lc).(\alpha\vartheta+\beta)/(\chi\vartheta+\delta)$$

La calibration est alors pratiquée dans un milieu de référence dont on connaît l'absorption à la température de calibration $\vartheta_0$ :

$$Q(\vartheta_0)=K.exp(-Ar.Lc).(\alpha\vartheta_0+\beta)/(\chi\vartheta_0+\delta)$$

La mesure dans le milieu à analyser à la température $\vartheta$ donne le signal de mesure Qm($\vartheta$) :

$$Qm(\vartheta)=K.exp(-Am.Lc). (\alpha\vartheta+\beta)/(\chi\vartheta+\delta)$$

Il vient que :

$$Qm(\vartheta)/Qr(\vartheta_0)=exp((Ar-Am).Lc).(\alpha\vartheta+\beta)/(\chi\vartheta+\delta).(\chi\vartheta_0+\delta)/(\alpha\vartheta_0+\beta)$$

$$Qm(\vartheta)/Qr(\vartheta_0)=exp((Ar-Am).Lc).(\vartheta+\beta/\alpha)/(\vartheta_0+\beta/\alpha).(\vartheta_0+\delta/\chi)/(\vartheta+\delta/\chi)$$

La détermination de $\beta/\alpha$ et $\delta/\chi$ se fait de manière expérimentale. Pour un liquide dont l'absorption ne varie pas avec la température, on établit la caractéristique de l'intensité $I1(\vartheta)$ reçue par le premier détecteur en fonction de la température $\vartheta$ au moyen de deux constantes a et b:

$$I1(\vartheta)=a\vartheta+b$$

En identifiant cette équation avec l'équation [4], il vient que :

$$a=I0.R.G1.exp(-A.(L2+L1)).\alpha$$

$$b=I0.R.G1.exp(-A.(L2+L1)).\beta$$

On en déduit aisément le rapport $K1=\beta/\alpha$ qui est égal au rapport b/a.

On procède ensuite de la même manière en établissant la caractéristique de l'intensité $I2(\vartheta)$ reçue par le deuxième détecteur en fonction de la température $\vartheta$ pour obtenir le rapport $K2=\delta/\chi$.

Ces deux rapports K1 et K2 caractérisant les variations de la température sont mémorisés dans le circuit de contrôle CC, tout comme la température de calibration $\vartheta_0$. De plus, un capteur (non représenté) informe ce circuit de contrôle CC sur la température $\vartheta$ à laquelle est réalisée la mesure.

La sonde optique objet de la présente invention réalise une mesure d'absorption par comparaison des propriétés optiques d'un milieu critique à celle d'un milieu de référence.

La calibration est réalisée une fois pour toutes avant la mise en service de cette sonde car la cellule de monitoring permet de s'affranchir des diverses dérives mentionnées plus haut dans l'introduction. Elle peut éventuellement être répétée ponctuellement de temps à autre, ne serait-ce que pour des raisons de sécurité.

La conception mécanique est modulaire, ce qui fait qu'il est possible de juxtaposer plusieurs sondes selon leur axe commun, chaque sonde prenant en compte une bande spectrale spécifique. On peut donc munir ces sondes de broches (non représentées) à leurs extrémités pour en faciliter le montage.

A titre d'exemple, pour l'analyse de l'eau on peut prévoir une seule sonde centrée sur la longueur d'onde 250 nm mais on peut également prévoir trois sondes centrées sur les longueurs d'onde 250 nm, 365 nm et 465 nm.

On peut même mettre deux sources lumineuses distinctes dans la même sonde sous réserve de ne pas activer ces sources simultanément.

Les exemples de réalisation de l'invention présentés ci-dessus ont été choisis eu égard à leur caractère concret. Il ne serait cependant pas possible de répertorier de manière exhaustive tous les modes de réalisation que recouvre cette invention. En particulier, tout moyen décrit peut être remplacé par un moyen équivalent sans sortir du cadre de la présente invention, qui est définie par les revendications annexées.

**Revendications**

**1.** Sonde optique de mesure d'absorption pour produire une valeur d'absorption Am comportant une cellule d'analyse (CA) d'un milieu à analyser, cette cellule d'analyse comprenant un module d'émission (LED, F1, HD) muni d'une source lumineuse (LED) et un module de détection (H1, D1) apte à produire un signal de détection (DS) et muni d'un premier détecteur (D1), ladite sonde optique comportant de plus une cellule de monitoring (CM) apte à produire un signal de monitoring (MS) et munie d'un deuxième détecteur (D2), ladite sonde optique étant arrangée pour que le premier détecteur (D1) reçoive un faisceau optique émis par la source lumineuse (LED) partiellement réfléchi au niveau de la cellule de monitoring (MS) et partiellement reçu par le deuxième détecteur (D2), dans laquelle ladite cellule de monitoring est agencée sur le chemin optique reliant ledit module d'émission audit module de détection,

- la source lumineuse (LED) est disposée derrière une fenêtre de diffusion (HD) figurant sur une face active de ladite cellule d'analyse (CA),
- le premier détecteur (D1) est disposé derrière un premier hublot (H1) figurant sur ladite face active de ladite cellule d'analyse (CA),
- le deuxième détecteur (D2) est disposé derrière un deuxième hublot (H2) figurant sur une face active de la cellule de monitoring, le milieu à analyser se trouvant entre la face active de la cellule d'analyse et la face active de la cellule de monitoring,

- l'agencement mécanique de la sonde optique est ainsi fait que le faisceau lumineux issu de la source lumineuse (LED) traverse successivement la fenêtre de diffusion (HD), le milieu à analyser, le deuxième hublot (H2) et soit finalement transmis pour partie au deuxième détecteur (D2), et

- ledit deuxième hublot (H2) est incliné par rapport à la face active de la cellule d'analyse de sorte qu'il réfléchisse partiellement le faisceau issu de ladite source lumineuse (LED) en direction dudit premier hublot (H1) et de sorte que la partie du faisceau lumineux qui est réfléchie par le deuxième hublot (H2) traverse successivement à nouveau le milieu à analyser, le premier hublot (H1) et est finalement transmise au premier détecteur (D1).

2. Sonde optique selon la revendication précédente, **caractérisée en ce que** lesdites cellules d'analyse (CA) et de monitoring (CM) se présentent chacune sous la forme d'un corps étanche présentant une face active.

3. Sonde optique selon la revendication 2 **caractérisée en ce que**, les deux détecteurs (D1, D2) sont identiques.

4. Sonde optique selon la revendication 2 ou 3 **caractérisée en ce que**, lesdites cellules d'analyse (CA) et de monitoring (CM) étant reliées par un moyen de liaison (L1, L2), les faces actives de ces cellules sont en vis-à-vis.

5. Sonde optique selon l'une quelconque des revendications précédentes, **caractérisée en ce qu'**elle comporte de plus un circuit de contrôle (CC) pour produire un signal de mesure Qm par pondération dudit signal de détection (DS) au moyen dudit signal de monitoring (MS).

6. Sonde optique selon la revendication précédente, **caractérisée en ce que** ledit signal de mesure Qm vaut le rapport dudit signal de détection (DS) audit signal de monitoring (MS).

7. Sonde optique selon la revendication précédente **caractérisée en ce que**, ledit circuit de contrôle (CC) ayant en mémoire les valeurs suivantes :

- une mesure de référence Qr,
- une absorption de référence Ar,
- une longueur caractéristique Lc,
le terme Ln signifiant logarithme népérien,
ladite valeur d'absorption Am est dérivée de l'expression suivante :

$$Am = Ar-(Ln(((Qm-Qr)/Qr)+1)/Lc)$$

8. Sonde optique selon la revendication précédente, **caractérisée en ce que** ledit circuit de contrôle (CC) est pourvu d'une compensation en température.

9. Sonde optique selon la revendication précédente, **caractérisée en ce que** ladite compensation en température est réalisée au moyen de deux constantes K1, K2, d'une température de calibration $\vartheta_0$ et de la température $\vartheta$ à laquelle est réalisée la mesure à partir de l'expression suivante :

$$Qm(\vartheta)/Qr(\vartheta_0)=exp((Ar-Am).Lc).(\vartheta+K1)/(\vartheta_0+K1).(\vartheta_0+K2)/(\vartheta+K2)$$

**Patentansprüche**

1. Optische Absorbtionsmesssonde zum Erzeugen eines Absortionswertes Am, umfassend eine Analysezelle (CA) eines zu analysierenden Milieus, wobei diese Analysezelle ein mit einer Leuchtquelle (LED) versehenes Sendemodul (LED, F1, HD) und ein Erfassungsmodul (H1, D1), das in der Lage ist, ein Detektionssignal (DS) zu erzeugen und mit einem ersten Detektor (D1) versehen ist, umfasst, wobei die optische Sonde ferner eine Monitoringzelle (CM) umfasst, die in der Lage ist, ein Monitoringsignal (MS) zu erzeugen und mit einem zweiten Detektor (D2) versehen ist, wobei die optische Sonde angeordnet ist, damit der erste Detektor (D1) einen von der Leuchtquelle (LED) emittierten und partiell an der Monitoringzelle (MS) reflektierten, partiell von dem zweiten Detektor (D2) empfangenen optischen Strahl empfängt, wobei die Monitoringzelle auf dem das Sendemodul und das Erfassungsmodul verbindenden optischen Pfad angeordnet ist, wobei

- die Leuchtquelle (LED) hinter einem auf einer aktiven Fläche der Analysezelle (CA) vorgesehenen Diffusionsfenster (HD) angeordnet ist,
- der erste Detektor (D1) hinter einer auf der aktiven Fläche der Analysezelle (CA) vorgesehenen ersten Luke (H1) angeordnet ist,
- der zweite Detektor (D2) hinter einer auf einer aktiven Fläche der Monitoringzelle (CM) vorgesehenen zweiten Luke (H2) angeordnet ist, wobei das zu analysierende Milieu sich zwischen der aktiven Fläche der Analysezelle und der aktiven Fläche der Monitoringzelle befindet,
- die mechanische Anordnung der optischen Sonde derart beschaffen ist, dass der von der Leuchtquelle (LED) ausgesandte Leuchtstrahl sukzessive das Diffusionsfenster (HD), das zu analysierende Milieu, die zweite Luke (H2) durchsetzt und schließlich zum Teil zu dem zweiten Detektor (D2) übermittelt wird, und
- die zweite Luke (H2) gegenüber der aktiven Fläche der Analysezelle derart geneigt ist, dass sie partiell den von der Leuchtquelle (LED) ausgesandten Leuchtstrahl in Richtung der ersten Luke (H1) reflektiert und derart, dass der Teil des Leuchtstrahls, der von der zweiten Luke (H2) reflektiert wird, sukzessive erneut das zu analysierende Milieu, die erste Luke (H1) durchsetzt und schließlich zu dem ersten Detektor (D1) übermittelt wird.

2. Optische Sonde nach dem vorhergehenden Anspruch, **dadurch gekennzeichnet, dass** die Analyse- (CA) und Monitoring- (CM) Zellen jeweils in Gestalt eines dichten Körpers mit einer aktiven Fläche ausgebildet sind.

3. Optische Sonde nach Anspruch 2, **dadurch gekennzeichnet, dass** die zwei Detektoren (D1, D2) identisch sind.

4. Optische Sonde nach Anspruch 2 oder 3, **dadurch gekennzeichnet, dass** die Analyse- (CA) und Monitoring- (CM) Zellen durch ein Verbindungsmittel (L1, L2) verbunden sind, wobei die aktiven Flächen dieser Zellen einander gegenüberliegend sind.

5. Optische Sonde nach einem der vorhergehenden Ansprüche, **dadurch gekennzeichnet, dass** sie ferner einen Regelkreis (CC) umfasst, um ein Messsignal Qm durch Gewichtubng des Detektionssignals (DS) mittels des Monitoringsignals (MS) zu erzeugen.

6. Optische Sonde nach einem der vorhergehenden Ansprüche, **dadurch gekennzeichnet, dass** das Messsignal Qm dem Verhältnis des Detektionssignal (DS) zu dem Monitoringsignal (MS) entspricht.

7. Optische Sonde nach einem der vorhergehenden Ansprüche, **dadurch gekennzeichnet, dass** der Regelkreis (CC) die folgenden Werte im Speicher aufweist:

- eine Referenzmessung Qr,
- eine Referenzabsorption Ar,
- eine charakteristische Länge Lc,

wobei der Term Ln einen natürlichen Logarithmus bezeichnet,
wobei der Absorptionswert Am abgeleitet wird aus dem nachstehenden Ausdruck:

$$Am = Ar-(Ln(((Qm-Qr)/Qr)+1)/Lc).$$

8. Optische Sonde nach dem vorhergehenden Anspruch, **dadurch gekennzeichnet, dass** der Regelkreis (CC) mit einer Temperaturkompensation versehen ist.

9. Optische Sonde nach dem vorhergehenden Anspruch, **dadurch gekennzeichnet, dass** die Temperaturkompensation mittels zweier Konstanten K1, K2, einer Kalibriertemperatur $\vartheta 0$ und einer Temperatur $\vartheta$, bei der die Messung realisiert wird, verwirklicht wird, ausgehend von der nachstehenden Formel:

$$Qm(\vartheta)/Qr(\vartheta 0)=\exp((Ar-Am).Lc\vartheta.(\vartheta+K1)/(\vartheta 0+K1).(\vartheta o+K2)/(\vartheta+K2).$$

**Claims**

1. An optical probe for measuring absorption in order to produce an absorption value Am, the probe comprising an analysis cell (CA) of a medium to be analyzed, said analysis cell including an emission module (LED, F1, HD) provided with a light source (LED) and a detection module (H1, D1) suitable for producing a detection signal (DS) and provided with a first detector (D1), said optical probe also including a monitoring cell (CM) suitable for producing a monitoring signal (MS) and provided with a second detector (D2), said optical probe being arranged so that the first detector (D1) receives an optical beam emitted by the light source (LED) partially reflected at the monitoring cell (MS) and partially received by the second detector (D2), in which said monitoring cell is arranged on the light path connecting said emission module to said detection module,

   - the light source (LED) is placed behind a diffusion window (HD) appearing in an active face of said analysis cell (CA),
   - the first detector (D1) is placed behind a first port (H1) appearing on said active face of said analysis cell (CA),
   - the second detector (D2) is disposed behind a second port (H2) appearing on an active face of the monitoring cell, the medium to be analyzed being located between the active face of the analysis cell and the active face of the monitoring cell,
   - the mechanical arrangement of the optical probe is made so that the light beam from the light source (LED) successively crosses the diffusion window (HD), the medium to be analyzed, the second port (H2) and is finally partially transmitted to the second detector (D2), and
   - said second port (H2) is inclined relative to the active face of the analysis cell so that it partially reflects the beam from said light source (LED) towards said first port (H1) and so that the part of the light beam which is reflected by the second port (H2) successively crosses again the medium to be analyzed, the first port (H1) and is finally transmitted to the first detector (D1).

2. An optical probe according to the preceding claim, **characterized in that** said analysis (CA) and monitoring (CM) cells are each in the form of a leaktight body presenting an active face.

3. An optical probe according to claim 2, **characterized in that** both detectors (D1, D2) are identical.

4. An optical probe according to claim 2 or 3, **characterized in that** said analysis (CA) and monitoring (CM) cells are connected together by connection means (L1, L2), the active faces of said cells facing each other.

5. An optical probe according to any one of the preceding claims, **characterized in that** it further includes a control circuit (CC) for producing a measurement signal Qm by weighting said detection signal (DS) by means of said monitoring signal (MS).

6. An optical probe according to the preceding claim, **characterized in that** said measurement signal Qm is the ratio of said detection signal (DS) to said monitoring signal (MS).

7. An optical probe according to the preceding claim, **characterized in that**, said control circuit (CC) contains the following values in memory:

   - a reference measurement Qr,
   - a reference absorption Ar, and
   - a characteristic length Lc,

   the term Ln meaning natural logarithm,
   said absorption value Am is derived from the following expression:

   $$Am = Ar - (Ln (((Qm-Qr) / Qr) + 1) / Lc)$$

8. An optical probe according to the preceding claim, **characterized in that** said control circuit (CC) is provided with temperature compensation.

9. An optical probe according to the preceding claim, **characterized in that** said temperature compensation is performed by means of two constants K1, K2, a calibration temperature $\vartheta_0$ and the temperature $\vartheta$ at which the measurement is performed, using the following expression:

$$Qm(\vartheta)/Qr(\vartheta_0)=\exp((Ar-Am).Lc).(\vartheta+K1)/(\vartheta_0+K1).(\vartheta_0+K2)/(\vartheta+K2) .$$

L1

H1

CM

L2

CA

Figure 1

L1   F1   HD        H2

CA        LED   F1            H2   D2

CM

D1            H1

L2   F2                F3

Figure 2

D1                D2

DS        CC

MS

A

Figure 3

**EP 2 368 104 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2911684 A1
- US 4037973 A